(19) Europäisches Patentamt
European Patent Office
Office européen des brevets

(11) **EP 1 520 368 B1**

# (12) EUROPÄISCHE PATENTSCHRIFT

(45) Veröffentlichungstag und Bekanntmachung des Hinweises auf die Patenterteilung:
**10.08.2011   Patentblatt 2011/32**

(21) Anmeldenummer: **03762392.3**

(22) Anmeldetag: **11.06.2003**

(51) Int Cl.:
**H04L 9/30** $^{(2006.01)}$

(86) Internationale Anmeldenummer:
**PCT/DE2003/001917**

(87) Internationale Veröffentlichungsnummer:
**WO 2004/006496 (15.01.2004 Gazette 2004/03)**

(54) **Verschlüsselungsverfahren basierend auf Faktorisierung**

Factorization-based encryption method

Procédé de codage reposant sur la factorisation

(84) Benannte Vertragsstaaten:
**AT BE BG CH CY CZ DE DK EE ES FI FR GB GR HU IE IT LI LU MC NL PT RO SE SI SK TR**

(30) Priorität: **03.07.2002   DE 10229811**

(43) Veröffentlichungstag der Anmeldung:
**06.04.2005   Patentblatt 2005/14**

(73) Patentinhaber: **Deutsche Telekom AG**
**53113 Bonn (DE)**

(72) Erfinder:
- **HUBER, Klaus**
  **University of Illinois**
  **Urbana**
  **IL 61801-2307 (US)**
- **BAUMGART, Matthias**
  **35394 Giessen (DE)**
- **SCHNEIDER, Tim**
  **64295 Darmstadt (DE)**

(56) Entgegenhaltungen:
- **KOYAMA K: "SECURITY AND UNIQUE DECIPHERABILITY OF TWO-DIMENSIONAL PUBLIC KEY CRYPTOSYSTEMS" TRANSACTIONS OF THE INSTITUTE OF ELECTRONICS, INFORMATION AND COMMUNICATION ENGINEERS OF JAPAN, INST. OF ELECTRONICS & COMMUNIC. ENGINEERS OF JAPAN. TOKYO, JP, Bd. E73, Nr. 7, Juli 1990 (1990-07), Seiten 1058-1067, XP000159218**

- **VARADHARAJAN V: "CRYPTOSYSTEMS BASED ON PERMUTATION POLYNOMIALS" INTERNATIONAL JOURNAL OF COMPUTER MATHEMATICS, GORDON AND BREACH PUBLISHERS, LONDON,, GB, Bd. 23, Nr. 3/4, 1988, Seiten 237-250, XP002067414 ISSN: 0020-7160**
- **SHAMIR A : "Efficient signature schemes based on birational permutations" ADVANCES IN CRYPTOLOGY - CRYPTO '93. CONFERENCE PROCEEDINGS. SPRINGER-VERLAG, 26. August 1993 (1993-08-26), Seiten 1-12, XP002251414 Santa Barbara, CA, USA ISBN: 3-540-57766-1**
- **LIN XU-DUAN ET AL: "MODIFIED LU-LEE CRYPTOSYSTEMS" ELECTRONICS LETTERS, IEE STEVENAGE, GB, Bd. 25, Nr. 13, 22. Juni 1989 (1989-06-22), Seite 826 XP000072040 ISSN: 0013-5194**
- **SCHWENK J ET AL: "PUBLIC KEY ENCRYPTION AND SIGNATURE SCHEMES BASED ON POLYNOMIALS OVER N" ADVANCES IN CRYPTOLOGY - EUROCRYPT '96. INTERNATIONAL CONFERENCE ON THE THEORY AND APPLICATION OF CRYPTOGRAPHIC TECHNIQUES. SARAGOSSA, MAY 12 - 16, 1996, ADVANCES IN CRYPTOLOGY - EUROCRYPT. INTERNATIONAL CONFERENCE ON THE THEORY AND APPLICATION OF CR, 12. Mai 1996 (1996-05-12), Seiten 60-71, XP000577413 ISBN: 3-540-61186-X in der Anmeldung erwähnt**

- **PATARIN J ET AL: "Trapdoor one-way permutations and multivariate polynomials (Extended Version)" INFORMATION AND COMMUNICATIONS SECURITY. INTERNATIONAL CONFERENCEICIS. PROCEEDINGS, XX, XX, 11. November 1997 (1997-11-11), Seiten 356-368, XP002205292**

**Beschreibung**

Die Erfindung betrifft ein asymmetrisches bzw. öffentliches Verschlüsselungsverfahren. Insbesondere betrifft die Erfindung ein Verfahren zur Verschlüsselung von Daten auf der Basis des Faktorisierungsproblems. Hierbei ist die Entzifferung von chiffrierten Daten so komplex wie das Problem, große Primteiler großer Zahlen zu finden. Im Detail sind bei der vorliegenden Erfindung bei der Entschlüsselung quadratische Gleichungen zu lösen.

Um Daten bei der Speicherung oder bei der Übertragung über unsichere Kommunikationskanäle vor dem Zugriff Unbefugter zu schützen, werden Verschlüsselungsverfahren eingesetzt. Dabei werden die Daten so verändert, dass ohne die Kenntnis eines bestimmten Schlüssels diese Veränderung nicht rückgängig gemacht werden kann. Verschlüsselungsverfahren lassen sich in die Kategorien asymmetrische und symmetrische Verschlüsselungsverfahren unterteilen. Bei symmetrischen Verfahren wird derselbe Schlüssel sowohl zur Ver- als auch zur Entschlüsselung verwendet. Asymmetrische Verfahren besitzen zwei unterschiedliche Schlüssel, von denen einer zur Verschlüsselung und der andere zur Entschlüsselung verwendet wird. Dabei kann der Verschlüsselungsschüssel allen Teilnehmern bekannt sein, wohingegen der Entschlüsselungsschlüssel geheim gehalten werden muss. Man bezeichnet daher den Verschlüsselungsschlüssel auch als öffentlichen Schlüssel und den Entschlüsselungsschlüssel als geheimen Schlüssel. Eine Übersicht über moderne Verschlüsselungsverfahren bietet z. B. das Buch [1] laut Literaturliste.

Bekannt sind die Verfahren von Rabin ([3]) und Williams ([6]), die ebenfalls quadratische Gleichungen verwenden. Allerdings wird bei diesen Verfahren nur die Hälfte der Datenbits pro Übertragung übermittelt. Hierdurch entstehen entsprechende Komplexitätsbeschränkungen und ein höherer Bedarf an Rechenleistung bei der Verschlüsselung und bei der Entschlüsselung.

Das Verfahren von Schwenk und Eisfeld ([5]) bietet bei Polynomen zweiten Grades wenig Sicherheit gegen Angriffe, die Abhängigkeiten der Nachrichtenteile $m_1$ und $m_2$ voneinander ausnutzen.

Gelöst wird die Aufgabe durch eine Erfindung mit den Merkmalen der unabhängigen Ansprüche. Hierdurch wird ein asymmetrisches Verschlüsselungsverfahren beschrieben, das auf dem Faktorisierungsproblem basiert. Es hat bei der Verschlüsselung eine geringere Komplexität als das RSA-Verfahren und kann mehr Datenbits pro Verschlüsselung übertragen als das Rabin- bzw. Williamsverfahren.

Wie bereits oben beschrieben wurde, handelt es sich bei der Erfindung um ein asymmetrisches Verschlüsselungsverfahren. Der öffentliche Schlüssel besteht aus einer großen zusammengesetzten Zahl n, der geheime Schüssel besteht aus den Faktoren der zusammengesetzten Zahl. Die Verschlüsselung besteht aus einer Anzahl von Iterationen einzelner Verschlüsselungsschritte, die während der Entschlüsselung sukzessive rückgängig gemacht werden. Die Umkehrung eines einzelnen Verschlüsselungsschrittes erfordert dabei das Lösen einer quadratischen Gleichung modulo n (siehe unten). Das Lösen einer solchen quadratischen Gleichung ist nur dann leicht möglich, wenn die Faktoren von n bekannt sind.

Der geheime Schlüssel besteht vorzugsweise aus den großen Primzahlen $p$ und $q$. Der öffentliche Schlüssel ist das Produkt n dieser beiden Primzahlen sowie eine vergleichsweise kleine ganze Zahl L, die größer als eins ist. Die Nachricht m besteht aus zwei ganzzahligen Werten $m_1$ und $m_2$, also

$$m = (m_1, m_2)$$

wobei beide Werte in der Menge $Z_n = \{0,1,2, \ldots ,n\text{-}1\}$ liegen.

Die Verschlüsselung geschieht durch die Gleichung

$$c = f^L(m).$$

Der verschlüsselte Wert c besteht im vorliegenden Fall ebenfalls aus einem Zweitupel ganzer Zahlen aus $Z_n$, d. h. $c = (c_1, c_2)$.

Die Funktion $f^L(m)$ ist rekursiv definiert durch

$$f^{j+1}(m) = f(f^j(m)),$$

Für $j = 1$ gilt $f^1(m) = f(m) = (f_1(m), f_2(m))$, wobei

$$f_1(m) = m_1 + m_2 \bmod n$$

$$f_2(m) = m_1 \cdot m_2 \bmod n.$$

Der verschlüsselte Text wird folglich erhalten mittels der Rekursionen

$$a_{i+1} = a_i + b_i \bmod n \qquad (1)$$

$$b_{i+1} = a_i \cdot b_i \bmod n. \qquad (2)$$

mit den Startwerten $a_0 = m_1$, $b_0 = m_2$ und den Endwerten $c_1 = a_L$, $c_2 = b_L$.

Für die Entschlüsselung muss man die Rekursion umkehren können. Dies geschieht durch Auflösung obiger Gleichungen nach $a_i$ und $b_i$. Man erhält sogleich die quadratische Gleichung

$$z^2 - a_{i+1} \cdot z + b_{i+1} = 0 \bmod n, \qquad (3)$$

die als Lösungen $a_i$ und $b_i$ besitzt. Auf das Problem der weiteren Lösungen von Gleichung (3) gehen wir später ein. Ist $n$ das Produkt von sehr großen Primzahlen, so ist das Auflösen von quadratischen Gleichungen ohne Kenntnis der Primfaktoren vermutlich ein sehr schwieriges Problem. Bei Kenntnis der Primfaktoren ist dies jedoch leicht möglich. Die gängigen Verfahren zum Wurzelziehen modulo $n$ sind ausführlich in [2] beschrieben.

Damit das Verschlüsselungssystem sicher ist, muss die Rekursion mindestens zweimal durchgeführt werden, da ansonsten bei genau einmaliger Durchführung die Nachrichtenteile $m_1$ und $m_2$ linear in den Term $a_1 = m_1 + m_2$ eingehen.

Ein weiterer wichtiger Aspekt ist die Auswahl der korrekten Wurzeln bei der Entschlüsselung

Wenn die Zahl n genau zwei Primfaktoren p und q enthält, hat Gleichung (3) vier Lösungen. Mit wenigen Bits für jedes $a_i$, $i = 1, 2, \ldots, L$ kann der Sender dem legitimen Empfänger die Mehrdeutigkeit eliminieren. Zur Auflösung der Mehrdeutigkeit können z. B. von den $a_i$ jeweils Prüf- bzw. Paritätszeichen abgeleitet werden.

Im günstigsten Fall werden, um die Mehrdeutigkeit in jedem Schritt völlig aufzulösen, 2 Bit pro Iterationsschritt benötigt. Die 4 Lösungen von Gleichung (3) sind gegeben durch

$$z_{i_{1,2,3,4}} = \frac{a_{i+1}}{2} + w_{i_{1,2,3,4}} \bmod n. \qquad (4)$$

wobei

$$w_{i_{1,2,3,4}} = \sqrt{a_{i+1}^2/4 - b_{i+1}} \bmod n$$

die vier Quadratwurzeln des obigen Ausdrucks modulo $n$ sind. Die vier Werte hängen wie folgt zusammen:

$$w_{i_1} = -w_{i_2} \bmod n \quad \text{und} \quad w_{i3} = -w_{i_4} \bmod n$$

Wir wählen die Parität (gerade, ungerade) der vier Wurzeln so, dass

$$w_{i_{1,3}} = \text{gerade} \quad \text{und} \quad w_{i_{2,4}} = \text{ungerade}$$

sind.

Eine besonders elegante Lösung, um alle vier Wurzeln voneinander unterscheiden zu können, ist für p≡q≡3 mod 4 wie folgt:

Zusätzlich zur Parität wird als weiteres Unterscheidungskriterium das so genannte Jacobisymbol ($w_i$/$n$) benutzt (zur Theorie und zur effizienten Berechnung siehe z. B. [2]). Das Jacobisymbol liefert für nichttriviale Werte von $w_i$, wie wir sie bei der Dechiffrierung benötigen, den Wert 1 oder -1. Die Berechnung des Jacobisymbols lässt sich mit Aufwand $O(\log^2 n)$ bewerkstelligen.

Die Parität und das Jacobisymbol reichen aus, um genau eine der vier Wurzeln $w_{i1,2,3,4}$ auszuwählen. Die Parität und das Jacobisymbol lassen sich mit 2 Bit codieren. Durch Anhängen dieser beiden Bits bei jedem der $L$ Iterationsschritte kann man den legitimen Empfänger in die Lage versetzen, die $L$ Iterationsschritte rückgängig zu machen.

Mit $w_i$ wird diejenige Wurzel, die in Gleichung (4) auf die Lösung $a_i$ führt, bezeichnet, also $a_i = a_{i+1}/2 + w_i$ mod $n$. Zu dieser Wurzel werden jeweils die Parität und das Jacobisymbol angegeben. Mit dem Wert von $a_i$ folgt dann sofort der Wert für $b_i$ zu $b_i = a_{i+i} - a_i$ mod $n$. Zusammenfassend erhält man also

$$a_i = a_{i+1}/2 + w_i \bmod n \qquad (5)$$

$$b_i = a_{i+1}/2 - w_i \bmod n. \qquad (6)$$

Bei der Verschlüsselung wird bei jedem Schritt aus dem Zahlenpaar ($a_i$, $b_i$) das Paar ($a_{i+1}$, $b_{i+1}$) berechnet sowie die Parität und das Jacobisymbol von $w_i = (a_i - a_{i+1}/2)$ mod n.

Bei Kenntnis der Faktorisierung lassen sich diese Schritte jeweils rückgängig machen durch Auflösung von

$$\sqrt{a_{i+1}^2/4 - b_{i+1} \bmod n} \, ,$$

wobei Parität und Jacobisymbol dieser Wurzel dargestellt werden.

Ein weiterer wichtiger Aspekt ist die Parameterwahl. Realistische Größenordnungen für jede der beiden Primzahlen sind derzeit ab ca. 510 Bit, d. h. $n$ hat eine Länge von ca. 1020 Bit. Für $L$ wird eine Größe $O(\log \log n)$ empfohlen, für $n$ von 1000 Bit ein Wert von ca. 3-10.

Die in Zukunft zu wählenden Bitlängen können sich an den Parametern des RSA-Verfahrens orientieren.

Ein Vorteil des hier präsentierten Verfahrens ist, dass die Anzahl der Nutzdaten doppelt so groß wie bei vergleichbaren Verfahren ist.

Mit Standardalgorithmen wird eine Verschlüsselungskomplexität von $O(L \log^2 n)$ erreicht, wenn man den Aufwand für eine Multiplikation mit $O(\log^2 n)$ rechnet. Für die Entschlüsselungskomplexität muss man bei Benutzung von gängigen Algorithmen mit einem Aufwand von $O(L \log^3 n)$ rechnen. Wählt man für $L$ eine Größenordnung von $O(\log \log n)$, so ergibt sich bei der Verschlüsselung gegenüber dem RSA-Verfahren ein Zeitvorteil (neben der größeren Nutzdatenrate).

Wie beim Rabin- und Williamsverfahren muss man bei der Realisierung beachten, dass jeweils nur die richtigen Wurzeln von Gleichung (3) bei der Entschlüsselung den Dechiffrierer verlassen, da ansonsten die Zahl n faktorisiert werden kann.

In einer weiteren Ausgestaltung wie beim RSA-Verfahren kann der Modul n auch mehr als zwei große Primfaktoren enthalten. Dementsprechend erhöht sich natürlich auch die Anzahl der Lösungen von Gleichung (3).

Eine weitere Verallgemeinerung wird dadurch erreicht, dass bei der Rekursion noch zusätzliche Konstanten eingeführt werden:

$$a_{i+1} = k_1 \cdot a_i + k_2 \cdot b_i \bmod n$$

$$b_{i+1} = k_3 \cdot a_i \cdot b_i \bmod n,$$

die als Teil des öffentlichen Schlüssels bekannt gemacht werden. Die Dechiffrierung geschieht in entsprechend modifizierter Form.

In einer weiteren Ausführungsform wird die Größe der Tupel verändert. Statt mit Zweitupeln $m = (m_1, m_2)$ kann man auch mit $q$ Tupeln arbeiten. Im Folgenden wird die Erweiterung anhand von Drei-Tupeln illustriert. Die Nachricht besteht nun aus dem Dreitupel

$$m = (m_1, m_2, m_3)$$

Die Formel für den $L$-ten Iterationsschritt lautet unverändert

$$f^{J+1}(m) = f(f^J(m)),$$

wobei allerdings die Grunditeration $f^1(m) = (f_1(m), f_2(m), f_3(m))$ wie folgt gebildet wird

$$f_1(m) = m_1 + m_2 + m_3 \bmod n$$

$$f_2(m) = m_1 \cdot m_2 + m_1 \cdot m_3 + m_2 \cdot m_3 \bmod n$$

$$f_3(m) = m_1 \cdot m_2 \cdot m_3 \bmod n \,.$$

Die Rückrechnung erfolgt durch Auflösung einer Gleichung dritten Grades. Die Unterscheidung der Wurzeln kann wieder durch entsprechend von den Zwischenergebnissen abgeleiteten Informationen (Paritäts-, Jacobisymbol, etc.) geschehen. Die Erweiterung auf Grade größer oder gleich vier kann in analoger Weise geschehen. Bei der Iteration sind im Wesentlichen die elementarsymmetrischen Newtonschen Terme zu betrachten, zu denen noch zusätzliche Konstanten, wie bereits oben beschrieben wurde, hinzutreten können.

Im Folgenden wird anhand eines Beispiels das Verfahren der vorliegenden Erfindung deutlich gemacht. Die im Folgenden gewählten Zahlen sind aus Gründen der Übersichtlichkeit sehr klein gewählt. Sei $n = 8549 = p \cdot q$, mit den geheimen Primzahlen $p = 83$ und $q = 103$. Die Anzahl der Iterationen sei $L = 3$ und die zu verschlüsselnde Nachricht sei gegeben *durch* $m = (m_1, m_2) = (123, 456)$. Gerade Parität werde durch eine Null, ungerade Parität durch eine Eins codiert. Hierzu dient das Paritätsbit *bp*. Ist das Jacobisymbol gleich eins wird eine Eins, ist es gleich minus eins, wird eine Null codiert. Hierzu wird das Jacobibit $b_J$ benutzt.

Man erhält die folgenden Werte

$$(a_0, \ b_0) \ = \ (123,456)$$

$$(a_1, \ b_1) \ = \ (579,4794)$$

$$(a_2, \ b_2) \ = \ (5373,5850)$$

$$(a_3, \ b_3) \ = \ (2674,5926)$$

Zu jedem der drei Paare $(a_1, b_1)$, $(a_2, b_2)$ und $(a_3, b_3)$ werden noch $L \cdot 2$ Bits Paritäts- und Jacobibits, die im Beispiel durch den folgenden Binärvektor $(b_{P3}, b_{J3}, b_{P2}, b_{J2}, b_{P1}, b_{J1}) = (0,0,1,1,0,1)$ gegeben sind, hinzugefügt.

Der Empfänger bestimmt zunächst die vier Wurzeln $w_{21,2,3,4}$ = 1629,4036,4513,6920. Anhand von $b_{P3}$ = 0 erkennt er, dass die richtige Wurzel gerade ist. Es bleiben also nur 4036 und 6920. Von diesen ist (4036/8549) = -1 und (6920/8549) = 1. $b_{J3}$ = 0 besagt, dass 4036 die richtige Wahl ist. Analoges Vorgehen führt zur vollständigen Entschlüsselung.

Auf die Mitübertragung der Bits zur Auflösung der Mehrdeutigkeit kann man in bestimmten Anwendungsfällen verzichten, z. B. wenn die unverschlüsselte Nachricht m Redundanz enthält. Dies ist beispielsweise bei normalen Texten der Fall oder wenn bereits in m ein so genannter Hashwert untergebracht wurde. Dies wird jedoch durch einen um den Faktor $4^L$ erhöhten Entschlüsselungsaufwand erkauft. Entsprechende Kompromisse sind ebenfalls möglich, z. B. verringert die Angabe von nur der Parität in jedem der $L$ Schritte die Zahl der mitzusendenden Bits auf $L$ Bit und erhöht den Entschlüsselungsaufwand um den Faktor $2^L$.

Wie bei den in der Literatur ([1],[3],[4],[5]) bekannten asymmetrischen Verfahren kann man auch bei dem vorgeschlagenen Verfahren im Wesentlichen durch Vertauschen von Ver- und Entschlüsselungsoperationen ein so genanntes digitales Signaturverfahren erhalten.

Liste der zitierten Literatur:

[1] A. J. Menezes, P. C. van Oorschot, S. A. Vanstone, "Handbook of Applied Cryptography", CRC Press, 1996.

[2] E. Bach, J. Shallit, "Algorithmic Number Theory", Vol. 1, Efficient Algorithms, The MIT Press, Cambrigde, Massachusetts, 1996.

[3] M. O. Rabin, "Digitalized Signatures and Public-key Functions as as intractable as Factorization ", MIT/LCS/TR-212, 1979.

[4] R. L. Rivest, A. Shamir, L. Adleman, "A Method for Obtaining Digital Signatures and Public Key Cryptosystems", Communications of the ACM, Vol. 21 Nr.2, pp. 120-126, Feb. 1978.

[5] J. Schwenk, J. Eisfeld, "Public Key Encryption and Signature Schemes based and Polynomials over Zn", Eurocrypt 1996, LNCS 1070, Springer-Verlag Berlin Heidelberg 1996.

[6] H. Williams, "A Modification of the RSA Public-Key Equation Procedure ", IEEE Transactions on Information Theorie, Vol. IT-26, No. 6, November 1980.

[7] KOYAMA, K, "Security and Unique Decipherability of Two-Dimensional Public Key Cryptosystems", Transactions of the Institute of Electronic, Information and Communication Engineers of Japan, Bd. E73, Nr. 7, pp.1058-1067, Juli 1990. [8] VARADHARAJAN,V, "Cryptosystems Based on Permutation Polynomials" International Journal of computer Mathematics, Gordon and BreachPublishers, Bd.23, Nr.3/4, pp. 237-250, ISSN:0020-7160, 1988.

**Patentansprüche**

1. Verfahren zur Verschlüsselung von Daten nach einem asymmetrischen Verfahren, basierend auf einem Faktorisierungsproblem, mit einem öffentlichen Schlüssel und einem privaten Schlüssel, wobei der öffentliche Schlüssel die Iterationszahl $L$ sowie die zusammengesetzte Zahl $n$ ist, wobei $n$ das Produkt mehrerer großer Primzahlen ist, wobei der private Schlüssel aus der Faktorisierung von $n$ besteht, wobei die zu verschlüsselnde Nachricht $m = (m_1, m_2)$ mindestens aus den Bestandteilen $m_1$ und $m_2$ besteht, wobei eine Verschlüsselungsfunktion $f(x)$ insgesamt L mal iteriert wird, mit $c = (c_1, c_2) = f^L(m)$, wobei $f(m)=(f_1(m),f_2(m))$ gilt und $f_1 = (m_1 op_1 m_2)$ mod $n$ sowie $f_2=(m_1 op_2 m_2)$ mod $n$, wobei $op_1$ eine Addition ist und $op_2$ eine Multiplikation ist, wobei die Verschlüsselungsfunktion $f(x)$ so gewählt ist, dass durch $L$-malige Auflösung einer quadratischen Gleichung modulo $n$ die Verschlüsselungsiteration rückgängig zu machen ist, wodurch aus der verschlüsselten Information $c = (c1, c2)$ die ursprüngliche Nachricht wiederzugewinnen ist.

2. Verfahren nach Anspruch 1, **dadurch gekennzeichnet, dass** eine Mehrdeutigkeit der quadratischen Gleichung durch zusätzliche Bits eliminiert wird.

3. Verfahren nach Anspruch 2, **dadurch gekennzeichnet, dass** die Mehrdeutigkeit der quadratischen Gleichung durch Berechnung einer Parität und eines Jacobisymbols eliminiert werden, die bei Primzahlen der Form 3 mod 4 durch 2 Bit je Iterationsschritt mitgeteilt werden können.

4. Verfahren nach einem oder mehreren der vorhergehenden Ansprüche, **dadurch gekennzeichnet, dass** allgemeine Iterationen $f_1 = (k_1 \cdot m_1 + k_2 \cdot m_2)$ mod $n$ sowie $f_2 = k_3 \cdot m_1 \cdot m_2$ mod $n$ verwendet werden, wobei die Konstanten Teil des öffentlichen Schlüssels sind.

5. Verfahren nach einem oder mehreren der vorhergehenden Ansprüche, **dadurch gekennzeichnet, dass** die zusammengesetzte Zahl $n$ als öffentlicher Schlüssel mehr als zwei Faktoren enthält.

6. Verfahren nach einem oder mehreren der vorhergehenden Ansprüche , **dadurch gekennzeichnet, dass** die Nachricht nun aus einem N-Tupel besteht $m=(m_1...m_N)$, wobei die Formel für den L-ten Iterationsschritt in jedem Iterationsschritt Abhängigkeiten von $N$ Werten verwendet.

7. Verfahren nach Anspruch 6, **dadurch gekennzeichnet, dass** die Mehrdeutigkeit durch zusätzliche Bits aufgelöst wird, die aus den in jeder Iteration erhaltenen Werten abgeleitet werden.

8. Verfahren nach einem oder mehreren der vorhergehenden Ansprüche, **dadurch gekennzeichnet, dass** die Mehrdeutigkeit durch Redundanz in den übermittelten Daten aufgelöst wird.

9. Verfahren zur Erzeugung einer Signatur, **dadurch gekennzeichnet, dass** durch Vertauschung der Ver- und Entschlüsselungsschritte aus dem vorhergehenden Verfahren eine Signatur erzeugt wird.

10. Software für einen Computer, **dadurch gekennzeichnet, dass** ein Verfahren nach einem oder mehreren der vorhergehenden Ansprüche implementiert ist.

11. Datenträger für einen Computer, **gekennzeichnet durch** die Speicherung einer Software nach dem vorhergehenden Softwareanspruch.

12. Computersystem, **gekennzeichnet durch** eine Einrichtung, die den Ablauf eines Verfahrens nach einem oder mehreren der vorhergehenden Verfahrensansprüche erlaubt.

**Claims**

1. Method for encrypting data according to an asymmetric method, based on a factorization problem, having a public key and a private key, wherein the public key is the iteration number $L$ as well as the composite number n, wherein n is the product of a plurality of large prime numbers, wherein the private key consists of the factorization of $n$, wherein the message $m = (m_1, m_2)$ to be encrypted consists of at least the components $m_1$ and $m_2$, wherein an encryption function $f(x)$ is iterated a total of $L$ times, with $c = (c_1, c_2) = f^L(m)$, wherein $f(m)=(f_1(m),f_2(m))$ applies, and $f_1 = (m_1 op_1 m_2)$ mod $n$ as well as $f_2 = (m_1, op_2 m_2)$ mod $n$, wherein $op_1$ is an addition and $op_2$ is a multiplication, wherein the encryption function $f(x)$ is selected such that the encryption iteration can be reversed by $L$-fold solution of a quadratic equation modulo $n$, by which means the original message can be recovered from the encrypted information $c = (c1, c2)$.

2. Method according to claim 1, **characterized in that** a multivaluedness of the quadratic equation is eliminated through additional bits.

3. Method according to claim 2, **characterized in that** the multivaluedness of the quadratic equation is eliminated by calculating a parity and a Jacobi symbol which, in the case of prime numbers of the form 3 mod 4, can be communicated by 2 bits per iteration step.

4. Method according to one or more of the preceding claims, **characterized in that** general iterations $f_1 = (k_1 \cdot m_1 + k_2 \cdot m_2)$ mod $n$ and $f_2 = k_3 \cdot m_1 \cdot m_2$ mod $n$ are used, wherein the constants are part of the public key.

5. Method according to one or more of the preceding claims, **characterized in that** the composite number n as public key contains more than two factors.

6. Method according to one or more of the preceding claims, **characterized in that** the message now consists of an N-tuple $m = (m_1...m_N)$, wherein the formula for the $L$th iteration step uses dependencies of $N$ values in each iteration step.

7. Method according to claim 6, **characterized in that** the multivaluedness is resolved by additional bits that are derived from the values obtained in each iteration.

8. Method according to one or more of the preceding claims, **characterized in that** the multivaluedness is resolved by redundancy in the transmitted data.

9. Method for generating a signature, **characterized in that** a signature is generated by interchanging the encryption and decryption steps from the preceding method.

10. Software for a computer, **characterized in that** a method according to one or more of the preceding claims is implemented.

11. Data media for a computer, **characterized by** the storage of software according to the preceding software claim.

12. Computer system, **characterized by** a device that permits the execution of a method according to one or more of the preceding claims.

**Revendications**

1. Procédé de cryptage de données selon un procédé asymétrique, basé sur un problème de factorisation, à l'aide d'une clé publique et d'une clé privée, la clé publique étant le nombre d'itération $L$ ainsi que le nombre composé $n$, $n$ étant le produit de plusieurs gros nombres premiers, la clé privée étant composée de la factorisation de $n$, le message à crypter $m = (m_1, m_2)$ étant composé au moins des composants $m_1$ et $m_2$, une fonction de cryptage $f(x)$ étant itérée $L$ fois au total, avec $c = (c_1, c_2) = f^L(m)$, $f(m) = (f_1(m), f_2(m))$ et $f_1 = (m_1\ op_1\ m_2)$ modn ainsi que $f_2 = (m_1\ op_2\ m_2)$ modn, $op_1$ étant une addition et $op_2$ étant une multiplication, la fonction de cryptage $f(x)$ étant choisie de manière à annuler l'itération de cryptage par résolution $L$ fois d'une équation carrée modulo $n$, dans le but de récupérer le message d'origine à partir de l'information cryptée $c = (c1, c2)$.

2. Procédé selon la revendication 1, **caractérisé en ce qu'**une ambiguïté de l'équation carrée est éliminée par des bits supplémentaires.

3. Procédé selon la revendication 2, **caractérisé en ce que** l'ambiguïté de l'équation carrée est éliminée par le calcul d'une parité et d'un symbole de Jacobi qui peuvent être communiqués par 2 bits par étape d'itération dans le cas de nombres premiers de la forme 3 mod 4.

4. Procédé selon l'une ou plusieurs des revendications précédentes, **caractérisé en ce que** des itérations générales

$f_1 = (k_1 \cdot m_1 + k_2 \cdot m_2) \bmod n$ ainsi que $f_2 = k_3 \cdot m_1 \cdot m_2 \bmod n$ sont utilisées, les constantes faisant partie de la clé publique.

**5.** Procédé selon l'une ou plusieurs des revendications précédentes, **caractérisé en ce que** le nombre composé n en tant que clé publique comprend plus de deux facteurs.

**6.** Procédé selon l'une ou plusieurs des revendications précédentes, **caractérisé en ce que** le message est à présent composé d'un N-uplet $m = (m_1...m_N)$, la formule pour la $L$-ième étape d'itération utilisant des fonctions de $N$ valeurs dans chaque étape d'itération.

**7.** Procédé selon la revendication 6, **caractérisé en ce que** l'ambiguïté est résolue par des bits supplémentaires dérivés des valeurs obtenues dans chaque itération.

**8.** Procédé selon l'une ou plusieurs des revendications précédentes, **caractérisé en ce que** l'ambiguïté est résolue par redondance dans les données transmises.

**9.** Procédé de génération d'une signature, **caractérisé en ce qu'**une signature est générée par permutation des étapes de cryptage et de décryptage des procédés précédents.

**10.** Logiciel destiné à un ordinateur, **caractérisé en ce qu'**un procédé selon l'une ou plusieurs des revendications précédentes est mis en oeuvre.

**11.** Support de données destiné à un ordinateur, **caractérisé par** l'enregistrement d'un logiciel selon la revendication de logiciel précédente.

**12.** Système d'ordinateur, **caractérisé par** un dispositif permettant le déroulement d'un procédé selon l'une ou plusieurs des revendications de procédé précédentes.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur

- **A. J. Menezes ; P. C. van Oorschot ; S. A. Vanstone.** Handbook of Applied Cryptography. CRC Press, 1996
- Algorithmic Number Theory. **E. Bach ; J. Shallit.** Efficient Algorithms. The MIT Press, 1996, vol. 1
- **M. O. Rabin.** Digitalized Signatures and Public-key Functions as as intractable as Factorization. *MIT/LCS/TR,* 1979, vol. 212
- **R. L. Rivest ; A. Shamir ; L. Adleman.** A Method for Obtaining Digital Signatures and Public Key Cryptosystems. *Communications of the ACM,* Februar 1978, vol. 21 (2), 120-126
- Public Key Encryption and Signature Schemes based and Polynomials over Z. **J. Schwenk ; J. Eisfeld.** Eurocrypt 1996. Springer-Verlag, 1996, vol. 1070
- **H. Williams.** A Modification of the RSA Public-Key Equation Procedure. *IEEE Transactions on Information Theorie,* November 1980, vol. IT-26 (6
- **KOYAMA, K.** Security and Unique Decipherability of Two-Dimensional Public Key Cryptosystems. *Transactions of the Institute of Electronic, Information and Communication Engineers of Japan,* Juli 1990, vol. E73 (7), 1058-1067
- Cryptosystems Based on Permutation Polynomials. **VARADHARAJAN,V.** International Journal of computer Mathematics. Gordon and BreachPublishers, 1988, vol. 23, 237-250